# DEMANDE DE BREVET EUROPEEN

(11) **EP 4 818 044 A1**
(43) Date de publication de la demande: **07.10.2026**
(21) Numéro de dépôt: 26167364.4
(22) Date de dépôt: 24.03.2026
(51) Int. Cl.: B64C 39/08, B64D 31/04

(54) **AÉRONEF COMPACT ET MANIABLE, NOTAMMENT OPTIMISE POUR LE VOL A PROPULSION HUMAINE**

(30) Priorité: 02.04.2025 FR 2503441
(71) Demandeur: Conord, Thomas, 31100 Toulouse (FR)
(72) Inventeur: Conord, Thomas, 31100 Toulouse (FR)

(57) **Abrégé**

L'invention concerne une configuration d'aéronef compact et maniable dont le vol peut être assuré par la seule force du pilote.

L'aéronef selon l'invention est caractérisé en ce qu'il a une configuration multi plans, auto stable et hyperstatique en losange, le rendant compact et maniable en vol, pouvant être utilisé à toute fin aéronautique, du planeur au drone. Une possible propulsion par une hélice en vol, une roue du train d'atterrissage au sol ou une hélice et des foils sur l'eau, entrainées par le pédalier tel un vélo, peut le rendre opérable au sol et en vol par un seul utilisateur.

Un tel aéronef est destiné à rendre le vol à propulsion humaine accessible à un plus grand nombre de personnes, à la frontière entre le « vol libre » du deltaplane, et de celui du vol Ultra Léger Motorisé - ULM.

## Description

### Domaine technique

La présente invention concerne les aéronefs dont le vol peut être assuré par la seule force du pilote.

### Technique antérieure

La nouvelle configuration d'aéronef proposée dans ce brevet découle d'une optimisation relative aux contraintes et besoins spécifiques au vol à propulsion humaine. Toutefois, la configuration proposée peut finalement être exploitée à toute fin aéronautique : vol à propulsion humaine, planeur, vol pendulaire, avion à un ou plusieurs passagers motorisé avec un système de pilotage plus ou moins automatique, drone.

Le vol à propulsion humaine, vol dont la propulsion pour le maintien en vol est assurée par la seule force du pilote, ses jambes et parfois ses bras, a fait ses premiers « bonds » sans grand succès au début du XX^{ième} siècle, notamment en France sous le nom de « aviette ». Il a finalement vu son essor dans le monde à partir des années 1960 avec le développement de nombreux aéronefs opérationnels qui ont démontré sa faisabilité technique.

Le « Man Powered Aircraft Group » de la « Royal Aeronautical Society », notamment sous l'impulsion de l'industriel anglais Henry Kremer, lançait dès 1959 des « prix Kremer », une série de défis récompensés par des prix, pour encourager les pionniers du vol à propulsion humaine.

Les réalisations les plus connues en occident ayant fait des vols longs sont le Gossamer Albatros de Paul Maccready ayant traversé la Manche en 1979, et le Daedalus du MIT ayant fait 119km au-dessus de la méditerranée en 1988.

A partir du début des années 1970, des rencontres annuelles appelées « Birdman rally » sont venues animer un peu partout dans le monde ces recherches, donnant lieu à de nombreux aéronefs plus ou moins opérationnels. C'est en particulier au Japon que s'est maintenu jusqu'à aujourd'hui ce type de rencontre annuel, appelé le JAPAN INTERNATIONAL BIRDMAN RALLY, qui optimise chaque année des aéronefs, majoritairement semblables en configuration à celle du Daedalus, qui volent de plus en plus longtemps et parcourent jusqu' à 60km, sans pour le moment dépasser le record des 119km du Daedalus.

L'ensemble de ces aéronefs ont en commun une configuration géométrique de celle d'un avion dite « classique » d'après seconde guerre mondiale, c'est-à-dire composée d'une unique aile portante et d'un empennage arrière comprenant une dérive verticale et un plan horizontal. Le Gossamer Albatros a une configuration légèrement différente avec le plan horizontal de l'empennage arrière placé à l'avant de l'appareil, dit en « canard », la dérive étant assurée par le fuselage lui-même, mais possède toujours une unique aile portante.

L'invention reprend de nombreux éléments techniques de ces aéronefs à propulsion humaine antérieurs comme :
- le pilote est assis à l'intérieur d'un fuselage caréné, profilé aérodynamiquement, pour réduire la trainée et donc assurer de meilleurs performances énergétiques,
- le pilote est assis sur un « vélo plus ou moins couché » d'où il entraine avec ses jambes un pédalier,
- le pédalier entraine avec une chaine ou une courroie une ou plusieurs hélices, placées à l'avant en traction, ou sur les ailes, ou à l'arrière en propulsion, pour maintenir l'aéronef à la bonne vitesse de vol,
- le pilote a dans ses mains des commandes qui contrôlent des gouvernes pour contrôler le mouvement de l'aéronef : profondeur, ailerons, éventuellement la dérive et une roulette directionnelle,
- la gouverne de profondeur reprend le principe du plan « canard » de la configuration du Gossamer Albatros en étant positionnée en avant du centre gravité pour gagner en temps de réponse de l'aéronef à cabrer, donc en maniabilité de l'aéronef,
- des ailerons classiques sont positionnés en bout d'ailes pour contrôler le roulis,
- une dérive assure la stabilité en lacet ; elle peut être en partie ou complètement directionnelle en fonction du besoin.

L'invention s'appuie plus largement sur l'ensemble du domaine aéronautique pour définir et optimiser ses sous éléments :
- la corde des ailes, le choix du profil des ailes, l'incidence locale des ailes, la forme de l'extrémité des ailes. La recherche individuelle de profil d'aile avec l'outil Héliciel pour avoir un très fort coefficient de portance Cz, un très faible coefficient de trainée Cx, et un décrochage très faible sur le domaine de vol choisi, mène au choix du profil d'aile NACA4414 ; ce choix est confirmé par son utilisation sur des avions existants et dans la littérature de la technique antérieure (notamment Human- Powered Vehicles de Allan V. Abbott, Gordon David Wilson).
- le nombre d'hélices et leur position en traction à l'avant de l'appareil, ou sur les ailes de l'appareil, ou en propulsion à l'arrière de l'appareil,
- le choix du profils des pales des hélices, le nombre de pales par hélice,
- l'ajout d'appendices aérodynamiques pour améliorer la performance générale de l'aéronef : ailettes de bout d'ailes (winglet), turbulateurs de couches limites, déflecteurs,
- la configuration multi plans pour réduire l'envergure,
- l'utilisation de mâts et de haubans pour rigidifier l'ensemble de la structure,
- l'utilisation de matériaux allant des métaux aux composites en fibres de carbone ou de verre, en passant par le bois, le plastique et les mousses polyuréthane.

Toutefois, pour atteindre le rendement aérodynamique permettant de voler à la force des jambes, les aéronefs à propulsion humaine existants jusqu'à maintenant sont des avions de type planeur avec des envergures énormes, généralement supérieures à 30m. Ces avions très encombrants nécessitent de nombreux assistants pour être mis en œuvre, et ils sont très peu maniables en vol, avec des virages effectués à plat par dérive latérale lente de l'avion.

### Exposé de l'invention

La présente invention a pour but d'éviter ces inconvénients de la technique antérieure en la rendant :
- compacte : aéronef avec une envergure divisée au minimum par deux par rapport à la technique antérieur, soit une envergure inférieure à 15m.
- maniable et opérable par un seul utilisateur : l'aéronef une fois assemblé doit pouvoir quitter, faire son vol et revenir à l'entrepôt de l'appareil, par la seule action du pilote à l'intérieur de l'aéronef.

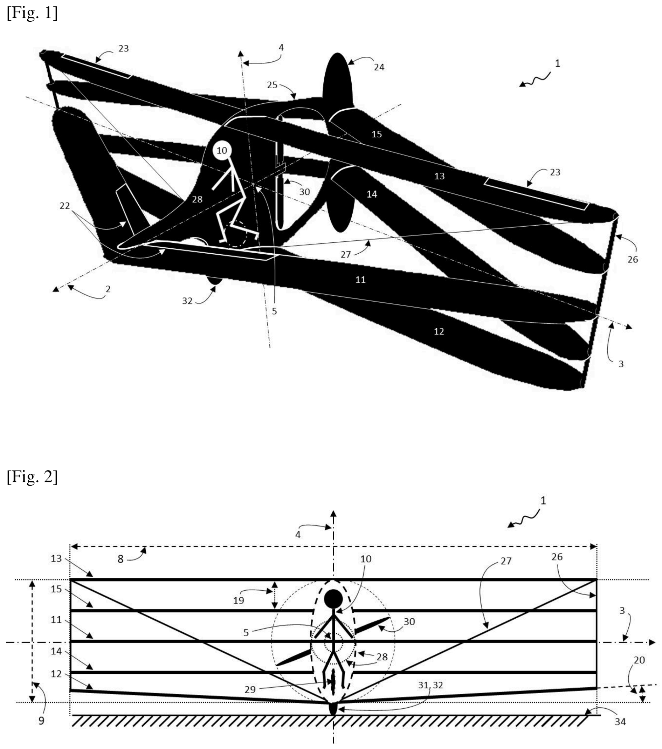

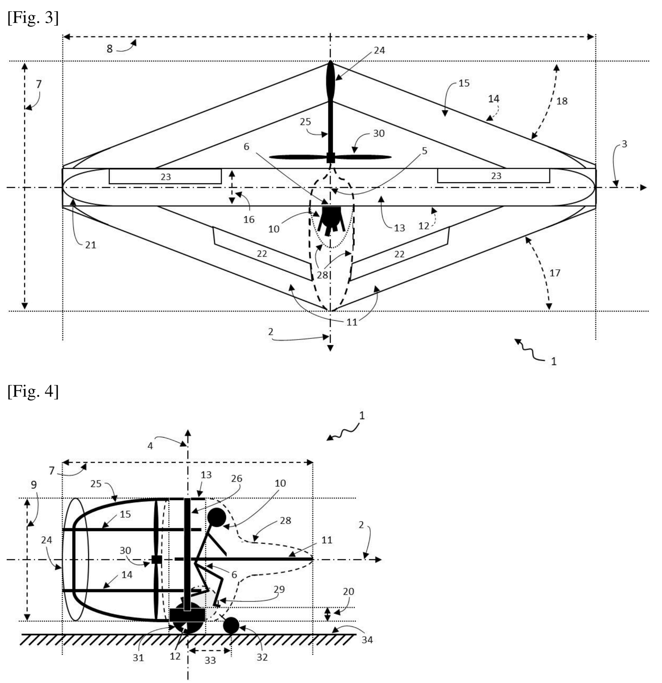

Elle propose à cet effet une nouvelle configuration géométrique d'aéronef comme représentée sur les figures [Fig.1] à [Fig.4] qui serait :
- multi plans : nombre d'ailes portantes supérieur ou égal à 2, d'envergures inférieures à 15m.
- auto stable : répartition des ailes portantes en avant et en arrière du centre de gravité afin d'équilibrer le tangage de l'aéronef par la position elles-mêmes des ailes. Cet agencement rend superflu le plan horizontal de l'empennage arrière « classique » dédié à cette fonction.
- hyperstatique en losange : les flèches des ailes sont orientées de telles sorte que leurs extrémités sont alignées, ou pratiquement alignées, permettant de les relier par des mâts et des haubans rigidifiant l'intégralité de la structure de l'appareil.
- avec une autonomie complète et efficace du mouvement au sol, équivalente à celle d'un vélo, permettant un décollage « sans hélice » effectué par la propulsion au sol des roues : la roue principale du train d'atterrissage est entrainée par le pédalier ; la vitesse de croisière est ainsi atteinte au sol par la force des jambes en roulant sans aide d'assistants, phase d'accélération où l'hélice n'a pas un bon rendement aérodynamique. Une des roues, ou roulette, est directionnelle pour avoir la capacité de tourner au sol.

Cette configuration multi plans est un peu moins optimale sur le plan du rendement aérodynamique que l'aile simple très élancée, de 30m d'envergure ou plus, des aéronefs à propulsion humaine qui ont déjà volé : nombreux tourbillons marginaux dus au nombre d'ailes ; mâts et haubans créant de la trainée supplémentaire.

Toutefois en tirant partie de sa structure hyperstatique, elle devrait permettre de diminuer la masse finale de l'aéronef en comparaison aux avions mono plan qui ont déjà volé, ce qui compenserait l'augmentation de la trainée due à la forme, tout en offrant beaucoup plus de maniabilité au sol et en vol de par sa compacité et rigidité.

### Brève description des dessins

L'invention sera mieux comprise et d'autres caractéristiques et avantages apparaîtront plus clairement à la lecture de la description donnée ci-après à titre d'exemples purement illustratifs et non limitatifs, en référence aux dessins annexés dans lesquels :
- la figure [Fig.1] représente une vue en 3 dimensions d'un aéronef à 5 plans selon l'invention, photo prise depuis l'avant gauche de la maquette à l'échelle 1/12 de l'aéronef convertie en image noir et blanc.
- Les figures [Fig.2], [Fig.3] et [Fig.4] présentent respectivement les projections en VUE DE FACE, VUE DE DESSUS et VUE DE PROFIL DROIT d'un aéronef à 5 plans selon l'invention.

### Description détaillée

De nombreuses configurations géométriques multi plans peuvent « voler », au sens de pouvoir s'arracher du sol pendant quelques secondes ou minutes. Des formes très variées ont effectivement été testées et ont fait des bonds, notamment dès le début du XXième siècle avec les premiers pas de l'aéronautique, comme le Blériot VI (avion motorisé). Des versions avec beaucoup plus d'ailes ont aussi tenté de s'envoler comme l'aéroplane d'Equevilley à 7 plans superposés, ou d'autres encore à 20 plans et plus, comme les Philips Multiplane, allant jusqu'à positionner sur la longueur du fuselage plusieurs cadrillages de dizaines d'ailes toutes petites empilées verticalement.

Il est ainsi possible de jouer sur tous les paramètres géométriques de la configuration :
- le nombre d'ailes supérieur ou égal à 2,
- la position des ailes,
- la corde des ailes (la corde n'est pas forcément constante sur la longueur d'une aile ; dans le cas où elle n'est pas constante, la corde fait référence à la corde aérodynamique moyenne, soit la surface de l'aile divisée par l'envergure ; pour l'invention, on considère que les ailes ont des cordes « constantes », même si le bout des ailes est affiné et que les ailes ont donc localement en bout d'aile une corde variable),
- la flèche des ailes,
- le dièdre des ailes,
- le nombre et la position des roues ou roulettes,
- le nombre et la position des mâts et haubans,

et en respectant un centrage correct (centre de gravité placé pour être le barycentre de la surface totale avec 25% de surface devant le cendre de gravité, et 75% de surface derrière le centre de gravité), et une surface portante totale suffisante pour porter le poids complet de l'aéronef au décollage à une vitesse de croisière atteignable par le pilote en pédalant au sol, l'aéronef fera très certainement des « bonds ». Toutefois, il est possible que pour les aéronefs à puissance humaine, le pilote s'épuise très vite du fait du faible rendement aérodynamique de l'appareil, et que ces « bonds » en vol ne durent que quelques secondes ou minutes.

Par conséquent, l'idée est de rechercher une configuration géométrique « optimale » en termes de bilan énergétique global, pour qu'une personne un minimum entrainée puisse faire un vol d'au moins 20 minutes avec l'aéronef.

Les hypothèses choisies pour faire le dimensionnement complet de l'aéronef sont les suivantes :
- aéronef compact d'envergure inférieure ou égale à 10m,
- taille du pilote : 1,75m,
- masse du pilote : 75kg,
- masse aéronef à vide : 25kg,
- masse totale au décollage : $m = 100 kg = 75 kg du pilote + 25 kg aéronef$
- puissance du pilote : capable de délivrer 200W en continu pendant 20min avec ses jambes,
- vitesse minimum de décrochage léger pour un coefficient de portance ${C}_{{z}_{max}} = 1 , 3 : {V}_{min} = 7.5 m / s = 27 km / h$
- vitesse de finesse maximale en vol pour un *C_{z_{f}}* = 0.75 : ${V}_{f} = 10 m / s = 36 km / h$

Selon l'équilibre de la portance pour une trajectoire en vol stabilisé horizontalement donné par $m g = \frac{1}{2} ρ {V}^{2} S {C}_{z}$, où *g* = 9.81 *m*/*s*² est l'accélération de la pesanteur et *ρ* = 1.1 *kg*/*m*³ une masse volumique de l'air conservative, appliqué au point de vitesse minimum de décrochage, cela donne une surface totale d'ailes à répartir sur tous les plans S = 24 *m*².

L'optimisation aérodynamique d'une aile prise individuellement mène aux éléments suivants :
- allongement des ailes (ratio envergure/corde): supérieur à 15 pour minimiser leur trainée induite (l'allongement de chaque aile doit être celle d'un planeur),
   - pour respecter les 10m d'envergure maximum, cela fait que les ailes doivent avoir une corde inférieure à 65cm,
   - si chaque aile d'envergure 10m à une corde inférieure à 65cm, leur surface individuelle est au maximum de 6,5m². Il faut donc au minimum 4 ailes pour avoir l'allongement souhaité et avoir une surface totale de 24m².
- écoulement laminaire minimisant la trainée de viscosité ( $Reynolds = \frac{V c}{ν}$ où *V* est la vitesse du point de vol considéré, *c* est la corde de l'aile et *ν* = 1,56 × 10⁻⁵ m ² / s la viscosité cinématique) : pour le profil d'aile NACA4414 retenu, l'écoulement reste laminaire avec un comportement de l'aile en incidence linéaire jusqu'à 12° d'incidence, puis avec un décrochage très doux entre 12° et 18° d'incidence, pour un Reynolds très largement borné entre 200 000 et 600 000, ce qui donne une corde optimale comprise de manière macroscopique entre 40cm et 1m pour la plage de vitesse choisie.
- tourbillons marginaux de bout d'aile : la méthode connue de l'aéronautique retenue pour minimiser les tourbillons marginaux de bout d'aile est de dessiner les extrémités des ailes en ellipse ; des ailettes de bout d'aile (winglet) peuvent aussi être ajoutés.

Pour respecter toutes les hypothèses précédentes, des configurations multi plans qui minimisent la trainée de chaque aile doivent donc avoir au minimum 4 ailes avec des cordes comprises entre 40cm et 65cm et des bouts d'ailes profilés (ellipse, winglet).

La question de comment agencer géométriquement ces 4 ailes ou plus alors se pose. Une autre contrainte s'ajoute : pour que chaque aile ait son rendement aérodynamique maximal, il faut éviter que les ailes soient dans le sillage les unes des autres ; notamment lorsqu'elles sont exactement superposées, l'écartement vertical entre 2 ailes doit être supérieur à la corde des ailes.

L'idée est de rechercher une configuration qui réponde à tous ces critères, permettant une optimisation aérodynamique et structurelle simultanée de l'aéronef :
- configuration auto stable : les ailes sont placées (position, flèche, incidence) pour que l'aéronef soit auto stable sans besoin d'un empennage arrière avec un plan horizontal ; le centre de gravité est placé pour être le barycentre de la surface totale avec 25% de surface devant le cendre de gravité, et 75% de surface derrière le centre de gravité,
- configuration hyperstatique en « losange » :
   - les flèches des ailes sont orientées de façon à ce que les extrémités de toutes les ailes soient alignées, ou presque, et maintenues entre elles par un mât, lui-même maintenu au fuselage par un hauban, ce qui rigidifie l'ensemble de l'appareil et devrait permettre de diminuer sa masse finale.
   - les ailes avec une flèche vers l'avant et celles avec une flèche vers l'arrière sont choisies de telle sorte qu'aucun couple de deux ailes juxtaposées verticalement se retrouvent exactement superposées : ainsi les plans ont encore moins d'influence entre eux malgré l'écartement vertical entre les ailes réduit à son minimum (voire à un peu moins que la valeur maximale de la corde des ailes).

Au final, le mode de réalisation préféré, au sens qu'il devrait correspondre à un optimum aérodynamique et structurel pour une masse totale au décollage de 100kg et prévu pour voler entre 7,5m/s et 10m/s, est caractérisé par une configuration à 5 ailes de corde 60cm et d'envergure 9m, hyperstatique en « losange » telle que représentée dans les figures [Fig.1] à [Fig.4], et décrit en détail dans la partie **Meilleur mode de**

### réalisation de l'invention.

Pour d'autres tailles et masses de pilote, l'analyse sera similaire et amènera à des aéronefs plus ou moins homothétiques de la configuration développée ici, par exemple :
- pour un aéronef de masse totale au décollage de 70kg = 50kg pilote + 20kg appareil et volant à une vitesse minimum de 25km/h, par exemple pour des jeunes dès 14 ans, cela donne une surface totale d'aile de 20m² à répartir entre N plans...
- pour un aéronef de masse totale au décollage de 150kg = 110kg pilote + 40kg appareil et pour le même domaine de vol, par exemple pour des rugbyman, cela donne une surface totale d'aile de 36m² à répartir entre M plans...

N et M ne sont pas forcément égaux à 5, car il se peut que l'homothétie ne soit pas directe et nécessite un redimensionnement spécifique, voire une reconfiguration avec l'ajout ou le retrait d'un plan ou plus ; c'est la raison pour laquelle le nombre de plans et la forme exacte du losange ne sont pas figés dans la description.

Le vol de l'appareil peut être contrôlé :
- par un ensemble de gouvernes (ailerons, profondeur, dérive) actionnés par le pilote par des organes de pilotage (manches, volant),
- ou bien par un système pendulaire comme pour les deltaplanes ou les ULM : les « organes de pilotage » sont dans ce cas une barre qui permet de déplacer le centre de gravité du pilote suspendu dans l'appareil.

De manière générale, des appendices aérodynamiques peuvent être ajoutés pour limiter la trainée induite de chaque aile ou améliorer la performance générale de l'aéronef :
- fuselage caréné 28 profilé aérodynamiquement englobant intégralement le pilote ou les équipements embarqués,
- bouts d'ailes de forme elliptique 21 ou autres,
- ailettes de bout d'ailes (winglet),
- turbulateurs de couches limites,
- déflecteurs.

Finalement, cette configuration d'aéronef peut être déclinée en différentes variantes pour différentes utilisations :
- en simple planeur : sans hélice et sans roue (donc sans pédalier), exactement comme un deltaplane en se lançant depuis une montagne, ou bien comme un planeur tracté par un avion, par une catapulte, par un engin motorisé au sol ou sur l'eau,
- en aéronef à propulsion humaine : pareil que précédemment mais avec uniquement une hélice entrainée par un pédalier pour se maintenir en vol, sans autonomie de mouvement au sol,
- en aéronef à propulsion humaine opérable au sol et en vol par le pilote seul : avec des roues, dont l'une au moins est entrainée par le pédalier, de même que l'hélice.
- en hydravion à propulsion humaine opérable sur l'eau et en vol par le pilote seul : avec ou sans les roues précédentes, avec des flotteurs ou des foils avec une petite hélice sous l'eau entrainée par le pédalier, pour permettre le décollage et l'atterrissage sur l'eau.
- en aéronef motorisé : avec le pédalier partiellement motorisé (comme pour un vélo électrique) ou complètement motorisé (comme pour une moto), ou bien avec des hélices et des roues directement entrainées par des moteurs, les moteurs pouvant être à énergie quelconque (essence, électrique sur batterie ou solaire, ...).
- en drone : le pilotage manuel est remplacé par des systèmes embarqués contrôlant automatiquement l'appareil au sol et en vol, avec ou sans passagers à bord.

### Meilleur mode de réalisation de l'invention

Les figures [Fig.1] à [Fig.4] présentent le meilleur mode de réalisation de l'aéronef à propulsion humaine conforme à l'invention 1, en cours de prototypage à l'échelle un par l'auteur du BREVET au moment du dépôt. Un prototype télécommandé à l'échelle 1/12 de cette configuration a été réalisé et a déjà démontré sa capacité de vol en décembre 2024.

Comme décrit dans la partie **Description détaillée,** pour une plage de masse totale au décollage de l'aéronef allant de 70 à 150 kg, une homothétie de l'ensemble des paramètres doit être considérée :
- la surface totale portante (la sommes des surfaces de toutes les ailes),
- le nombre d'ailes supérieur ou égal à 2,
- la position de chaque aile,
- la corde de chaque aile,
- la flèche de chaque aile,
- le dièdre de chaque aile,
- le nombre et la position des roues ou roulettes,
- le nombre et la position des mâts et haubans.

Le meilleur mode de l'aéronef à propulsion humaine 1 selon l'invention illustré par les figures [Fig.1] à [Fig.4], est décrit ci-dessous pour une masse totale au décollage de 100kg et volant entre 7,5m/s (= 27km/h) et 10m/s (=36km/h) grâce à la seule force du pilote. Il est caractérisé en ce que :
- il a une configuration à cinq plans disposés en un losange (bien visible sur la VUE DE DESSUS de la figure [Fig.3]) de 3,5 à 4,5m de long, de 7,5 à 10,5m d'envergure et de 1,8m à 2,6m de hauteur sans les roues, avec :
   - Les cinq ailes 11, 12, 13, 14 et 15 de 7,5 à 10,5m d'envergure ont une corde de 45 à 65cm avec un profil aérodynamique compris entre NACA4412 à NACA4415 en fonction de la masse totale au décollage et de la vitesse de croisière choisie (les deux derniers digits des profils NACA indiquent l'épaisseur de l'aile en pourcentage de la corde, soit une épaisseur allant de 12% à 15% de la valeur de la corde), et leurs extrémités se terminent en ellipse. Les valeurs précises d'envergure et de corde sont choisies pour que la surface totale portante permette de porter la masse totale au décollage selon l'équation de portance, en prenant en compte la surface occupée par le fuselage et la forme des bouts d'ailes.
   - Toutes les ailes sont séparées verticalement de 45 à 65 cm (écartement vertical 19) en leur centre en fonction de la valeur de la corde, ce qui donne une hauteur de fuselage 28 compris entre 1,8m et 2,6m. La valeur d'écartement vertical 19 entre les ailes peut être choisie légèrement inférieure à la valeur de la corde 16 : les flèches des ailes 11, 14 et 15 font qu'aucune paire d'ailes consécutives verticalement ne se retrouve exactement l'une au-dessus de l'autre; réduire légèrement l'écartement vertical entre deux plans consécutifs ne réduirait donc pas leur performance aérodynamique. De leur côté, les extrémités de toutes les ailes se retrouvent pour le coup juxtaposées verticalement : l'extrémité des ailes se terminant en ellipse, leurs cordes vont en rétrécissant à ce niveau-là et terminent à une valeur proche de 10cm au niveau du mât de bout d'aile, ce qui permet d'avoir localement un écartement vertical entre deux ailes consécutives supérieur à la valeur courante de la corde de l'aile, et donc de limiter leur influence réciproque.
   - L'aile avant 11 fait une flèche vers l'avant 17 depuis l'origine du repère 5 de l'aéronef jusqu' à l'extrémité avant de l'appareil situé 1,75 à 2,25m devant l'origine du repère 5.
   - Les deux ailes arrière 14 et 15 identiques entre elles, l'aile 14 étant située sous l'aile 15, font une flèche vers l'arrière 18 en symétrie de l'aile 11 par rapport au centre géométrique 5.
   - Les deux ailes 12 et 13 sont des ailes sans flèches centrées horizontalement sur l'origine du repère 5 de l'appareil, l'aile 12 étant fixée verticalement au plus bas du fuselage et l'aile 13 au plus haut.
   - L'aile 12 la plus basse a un dièdre positif de 0° à 5°, donnant une surélévation du bout d'aile comprise entre 0 et 40cm, pour permettre un léger roulis au sol.
   - Les extrémités de toutes les ailes se trouvent alignés verticalement et sont attachées à un mât de bout d'aile 26 vertical pour rigidifier l'ensemble de la structure, lui-même attaché à un hauban 27 relié au point central le plus bas du fuselage 28. Du fait des tolérances sur la position, la flèche et le dièdre de chaque aile, les extrémités de toutes les ailes peuvent ne pas être strictement alignées verticalement et le mât de bout d'aile 26 peut ne pas être une barre verticale, mais un assemblage en « zig-zag » de barres reliant chaque paire d'extrémité d'ailes.
   - Le centre de gravité de l'appareil 6 se trouve latéralement dans le plan de symétrie de l'appareil, horizontalement entre 15 et 45cm devant l'origine du repère 5, et verticalement en dessous de l'axe longitudinal 2 (le plus bas étant le mieux), pour que la configuration soit stable en vol sans oscillations et ait une bonne maniabilité.
   - Le pilote 10 positionné au centre de gravité 6 de l'aéronef a dans ces mains des organes de pilotage pour contrôler le mouvement des ailerons 23, donc le mouvement de roulis de l'aéronef (rotation autour de l'axe x, axe longitudinal de référence 2); le mouvement de la gouverne de profondeur 22, donc le mouvement en tangage de l'aéronef (rotation autour de l'axe y, axe latéral de référence 3); éventuellement le mouvement de la dérive 24 pour le mouvement de lacet (rotation autour de l'axe z, axe vertical de référence 4).
- il possède une hélice 30 placée en propulsion derrière le pilote, entrainée par un pédalier mû par le pilote, pour assurer la propulsion de l'aéronef en vol,
- il possède une roue principale 31 placée sur l'axe vertical de référence 4 de l'aéronef et dépassant de 10cm à 20cm sous l'aile (12) la plus basse, entrainée par le pédalier mû par le pilote pour assurer la propulsion de l'aéronef au sol, et une roue 32 directionnelle placée à l'avant de cette roue avec un empattement 33 au sol de 70cm à 1m selon la figure [Fig.4] pour assurer la direction de l'aéronef au sol: le centre de gravité 6 de l'aéronef se situe donc à peu près au milieu entre les deux roues, assurant une bonne stabilité du roulage au sol, et donc une autonomie complète et efficace du mouvement au sol 34,
- le fuselage 28 est un carénage au plus proche du pilote, telle une seconde peau aérodynamique, faisant 60 à 80cm de largeur au plus large et 1,8m à 2,6 m de haut pour englober le pilote en position debout, avec des courbures dans l'axe longitudinal 2 selon le profil NACA66021 pour que sa traînée aérodynamique soit la plus petite possible, selon la forme spécifique représentée sur les figures [Fig.1] à [Fig.4] composée:
   • d'une « pointe avant » faisant une avancée vers l'avant jusqu'à la pointe de l'aile 11, et s'arrêtant devant le pilote selon un cercle de 40 à 70 cm de diamètre,
   • d'une partie verticale s'ouvrant depuis ce cercle de 40 à 70cm de diamètre vers l'arrière autour du pilote positionné debout, vers le haut devant le buste du pilote jusqu'à l'aile centrale haute 13 et vers le bas devant ses jambes jusqu'à l'aile centrale basse 12, pour l'englober complètement,
   • d'un bord de fuite vertical situé derrière le pilote dans l'alignement du bord de fuite de l'aile 12 et 13, avec en son centre le point d'attache de l'hélice 30, et à ces deux extrémités haute et basse les barres de structure 25 partant vers l'arrière pour soutenir les ailes arrières 14 et 15 en leur centre (bien visible sur la figure [Fig 4]).

L'origine du repère géométrique x, y , z, de numéro 5 dans la **Liste des signes de référence,** est choisi arbitrairement et n'a aucune signification aérodynamique.

Toutes les évaluations ont été faites de manière conservative en prenant à chaque fois des valeurs pessimistes de tous les paramètres, ce qui devrait donner de la marge pour décoller à une vitesse encore plus basse, donc plus facile pour le pilote.

Une telle réalisation suppose une maitrise de la conception mécanique permettant d'aboutir à un aéronef selon l'invention 1 pesant proche de 25kg de masse à vide ; elle devrait pouvoir voler à la force des jambes dans la mesure aussi où l'hélice est capable de générer une poussée proche de 200W sur le domaine de vol sans épuiser le pilote.

### Liste des signes de référence

- 1 :: aéronef
- 2 :: axe longitudinal de référence x
- 3 :: axe latéral de référence y
- 4 :: axe vertical de référence z
- 5 :: origine du repère x, y, z
- 6:: centre de gravité idéal
- 7 :: longueur
- 8 :: largeur ou envergure
- 9 :: hauteur
- 10 :: pilote
- 11 :: aile 1
- 12 :: aile 2
- 13 :: aile 3
- 14 :: aile 4
- 15 :: aile 5
- 16 :: corde des ailes
- 17 :: flèche vers l'avant aile 1
- 18 :: flèche vers l'arrière ailes 4 et 5
- 19 :: écartement vertical entre les ailes
- 20 :: dièdre aile 2
- 21 :: bout d'aile elliptique
- 22 :: gouverne de profondeur
- 23 :: ailerons
- 24 :: dérive
- 25 :: barres de structure
- 26 :: mât de bout d'aile
- 27 :: hauban
- 28 :: fuselage caréné
- 29 :: pédalier
- 30 :: hélice
- 31 :: roue motrice
- 32 :: roue directionnelle
- 33 :: empattement
- 34 :: sol

## Revendications

1. Aéronef (1) **caractérisé en ce qu'**il a une configuration à 5 plans auto stable et hyperstatique en losange avec :
a. la flèche (17) de l'aile (11), centrale sur l'axe vertical, qui va vers l'avant,
b. la flèche (18) des ailes (14) et (15) situées au-dessus et en dessous de l'aile centrale (11) qui va vers l'arrière, afin d'équilibrer le tangage de l'aéronef par la position elle-même des ailes en fonction de la position du centre de gravité,
c. les extrémités des ailes qui sont alignées verticalement, ou pratiquement alignées, et reliées à leurs extrémités par deux mâts (26) rigidifiant l'intégralité de la structure de l'appareil, éventuellement aidés par des haubans (27).

2. Aéronef (1) selon la revendication 1 **caractérisé en ce qu'**il a une configuration à cinq plans de profil aérodynamique compris entre NACA4412 à NACA4415, disposés en un losange de 3,5 à 4,5m de long, de 7,5 à 10,5m d'envergure et de 1,8 à 2,6m de hauteur sans les roues, avec :
a. les cinq ailes (11, 12, 13, 14, 15) de 7,5 à 10,5m d'envergure et de corde 45 à 65cm,
b. les ailes séparées verticalement (19) en leur centre de 45 à 65 cm, donnant une hauteur de fuselage (28) de 1,8 à 2,6m,
c. l'aile avant (11) faisant une flèche (17) vers l'avant depuis l'origine du repère (5) de l'aéronef jusqu'à l'extrémité avant de l'appareil située 1,75 à 2,25m devant l'origine du repère (5),
d. les deux ailes arrières (14) et (15) identiques entre elles, l'aile (14) étant située sous l'aile (15), faisant une flèche (18) vers l'arrière jusqu'à l'extrémité arrière de l'appareil située 1,75 à 2,25m derrière l'origine du repère (5), en symétrie de l'aile avant (11) par rapport au centre géométrique (5),
e. les deux ailes (12) et (13) sans flèche centrées horizontalement sur l'origine du repère (5) de l'appareil, l'aile (12) étant fixée verticalement au plus bas du fuselage et l'aile (13) au plus haut,
f. l'aile (12) la plus basse a un dièdre positif de 0° à 5°, donnant une surélévation de ses bouts d'aile de 0 à 40cm, pour permettre un léger roulis au sol,
g. les extrémités de toutes les ailes de forme elliptique (21),
h. les extrémités d'un même côté de toutes les ailes alignées verticalement et attachées à un mât de bout d'aile (26) rigidifiant l'ensemble de la structure, lui-même attaché à un hauban (27) relié au point central le plus bas du fuselage (28),
i. le centre de gravité de l'appareil (6) placé latéralement dans le plan de symétrie de l'appareil, horizontalement entre 15 et 45cm devant l'origine du repère (5), et verticalement en dessous de l'axe longitudinal (2), pour que la configuration soit stable en vol sans oscillations et ait une bonne maniabilité,
j. une hélice (30) placée en propulsion derrière le pilote, entrainée par un pédalier mû par le pilote, pour assurer la propulsion de l'aéronef en vol,
k. une roue principale (31) placée sur l'axe vertical de référence (4) de l'aéronef et dépassant verticalement de 10cm à 20cm sous l'aile (12), entrainée par le pédalier mû par pilote pour assurer la propulsion de l'aéronef au sol, et une roue (32) directionnelle placée à l'avant de cette roue avec un empattement (33) au sol de 70cm à 1m pour assurer la direction de l'aéronef au sol.

3. Aéronef (1) selon la revendication 2, **caractérisé en ce que** le fuselage (28) fait 60 à 80cm de largeur au plus large et 1,8 à 2,6m de haut pour englober le pilote en position debout, avec des courbures dans l'axe longitudinal (2) selon le profil aérodynamique NACA66021, selon la forme spécifique composée :
a. d'une « pointe avant » en forme de cône, faisant une avancée vers l'avant jusqu'à la pointe de l'aile avant (11), et s'arrêtant devant le pilote (10) selon un cercle de 40 à 70cm de diamètre,
b. d'une partie verticale s'ouvrant depuis ce cercle de 40 à 70cm de diamètre vers l'arrière autour du pilote en position debout, vers le haut devant le buste du pilote jusqu'à l'aile centrale haute (13) et vers le bas devant ses jambes jusqu'à l'aile centrale basse (12), pour l'englober complètement.
c. d'un bord de fuite vertical situé derrière le pilote (10) dans l'alignement du bord de fuite de l'aile (12) et (13), avec en son centre le point d'attache de l'hélice (30), et à ces deux extrémités haute et basse les barres de structure (25) partant vers l'arrière pour soutenir les ailes arrières (14) et (15) en leur centre.
